# EUROPEAN PATENT APPLICATION

(11) **EP 2 568 757 A1**
(43) Date of publication of application: **13.03.2013**
(21) Application number: 11789126.7
(22) Date of filing: 18.05.2011
(51) Int. Cl.: H04W 72/04

(54) **MEASUREMENT METHOD FOR CELL MANAGEMENT, BASE STATION AND COMMUNICATION SYSTEM**

(30) Priority: 03.06.2010 CN 201010193978
(71) Applicant: Huawei Technologies Co., Ltd., Shenzhen, Guangdong 518129 (CN)
(72) Inventor: XIAO, Dengkun, Shenzhen Guangdong 518129 (CN); HE, Yuan, Shenzhen Guangdong 518129 (CN)
(74) Representative: Thun, Clemens
(86) International application number: PCT/CN2011/074267
(87) International publication number: WO 2011/150747

(57) **Abstract**

A measuring method for cell management, a base station and a communication system are disclosed in the present invention, which is used for the communications field. The method includes: monitoring traffic of a downlink service of a user equipment (UE), when the traffic of the downlink service of the UE is equal to or greater than a first threshold, and/or monitoring channel state of a downlink channel of an activated cell of the UE, when the channel state of the downlink channel of the activated cell of the UE is worse than or equal to a second threshold, transmitting a measurement configuration message to the UE to cause the UE to measure a carrier frequency point indicated by the measurement configuration message, and to report a measurement report ; and performing the cell management according to the measurement report. With the methods provided by the embodiments of the present invention, the problem in the prior art that the mechanism for measuring frequency point cannot effectively applied to the cell management can be resolved.

## Description

This application claims the benefit of Chinese patent application No. CN201010193978.6, entitled "Measuring Method for Cell Management, Base Station and Communication System", and filed with the Chinese Patent Office on June 3, 2010, which is incorporated herein by reference in its entirety.

### Field of the Invention

Embodiments of the present invention relate to the technical field of communication, and more particularly to a measuring method, a base station and a communication system for cell management.

### Background of the Invention

The technique of carrier aggregation (Carrier Aggregation) is employed in communication systems. In the technique of carrier aggregation, spectra of two or more component carriers (CC) are aggregated together to form a communication system with broader transmission bandwidth, in which system each component carrier can be configured as compatible with the system, and spectra of the various component carriers may be adjacent continuous spectra, and may also be non-adjacent spectra in the same frequency band, or may even be discontinuous spectra in different frequency bands.

The base station can inform the user equipment (UE) of the configured cell (configured cell) through dedicated signaling, and the configured cell is a cell that corresponds to the carrier frequency point supported by the radio frequency capability of the UE, while a cell that corresponds to a carrier frequency point supported by the radio frequency capability of the UE but not configured is referred as a non-configured cell (non-configured cell). A configured cell may include both uplink and downlink resources. A configured cell may be either in activated status (activated status) or in deactivated status (deactivated status) . From the configured cells, the base station can select one cell as a primary cell (primary cell), while the other configured cells serve as secondary cells. A primary cell cannot be deactivated, while a secondary cell (secondary cell) may either be activated or be deactivated.

The base station can inform the UE (User Equipment User Equipment) of a carrier frequency point required to be measured by transmitting a measurement configuration message to the UE, and the UE periodically measures the configured carrier frequency point and reports to the base station the measurement result when some condition such as A3 event is fulfilled.

There is a problem in the prior art that the mechanism of for measuring frequency point cannot be effectively applied to the cell management.

### Summary of the Invention

Embodiments of the present invention provide a measuring method, a base station and a communication system for cell management, in order to solve the problem in the prior art that the mechanism for measuring frequency point cannot be effectively applied to the cell management.

Embodiments of the present invention provide a measuring method for cell management including:
monitoring traffic of a downlink service of a user equipment (UE), when the traffic of the downlink service of the UE is equal to or greater than a first threshold, and/or monitoring a channel state of a downlink channel of an activated cell of the UE, when the channel state of the downlink channel of the activated cell of the UE is worse than or equal to a second threshold,
transmitting a measurement configuration message to the UE to cause the UE to measure a carrier frequency point indicated by the measurement configuration message, and to report a measurement report ; and
performing the cell management according to the measurement report.

Embodiments of the present invention provide a base station including:
a monitoring and determining module, configured to monitor traffic of a downlink service of a user equipment (UE) and determine that the traffic of the downlink service of the UE is equal to or greater than a first threshold, and/or
configured to monitor a channel state of a downlink channel of an activated cell of the UE and determine that the channel state of the downlink channel of the activated cell of the UE is worse than or equal to a second threshold;
a transmitting module, configured to transmit a measurement configuration message to the UE after the monitoring and determining module determines that the traffic of the downlink service of the UE is equal to or greater than a first threshold and/or that the channel state of the downlink channel of the activated cell of the UE is worse than or equal to a second threshold, to cause the UE to measure a carrier frequency point indicated by the measurement configuration message and to report a measurement report ; and
a receiving and cell managing module, configured to receive the measurement report and to perform the cell management according to the measurement report.

Embodiments of the present invention provide a communication system including:
a base station communicably connected to a user equipment (UE), the base station monitors downlink traffic of a downlink service of the UE, when the traffic of the downlink service of the UE is equal to or greater than a first threshold, and/or monitors a channel state of a downlink channel of an activated cell of the UE, when the downlink channel state of the activated cell of the UE is worse than or equal to a second threshold,
transmits a measurement configuration message to the UE to cause the UE to measure a carrier frequency point indicated by the measurement configuration message, and to report a measurement report ; and
performs cell management according to the measurement report.

By virtue of the measuring method, the base station and the communication system for cell management provided by the embodiments of the present invention, it is possible to perform cell measurement when needed according to the circumstance of the network, thereby the total time required for measuring is decreased, the power consumption of the UE is decreased, and the performance of power-saving is improved. Moreover, in comparison with the method of measuring periodically that may require many times for reporting the measurement results, embodiments of the present invention require only one time for reporting the measurement results, thereby decreasing the signaling overhead.

### Brief Description of the Drawings

To better clarify technical solutions in the embodiments of the present invention or in the prior art, accompanying drawings needed in the description of the embodiments or the prior art are briefly illustrated below. Apparently, the accompanying drawings illustrated below are merely some embodiments of the present invention, and it is possible for persons ordinarily skilled in the art to derive other drawings from these drawings without creative effort.
Fig. 1 is a flowchart illustrating a measuring method for cell management provided by the embodiments of the present invention;
Fig. 2 is a flowchart illustrating another measuring method for cell management provided by the embodiments of the present invention;
Fig. 3 is a schematic diagram exemplarily illustrating the structure of a base station provided by the embodiments of the present invention; and
Fig. 4 is a schematic diagram exemplarily illustrating the structure of a communication system provided by the embodiments of the present invention.

### Detailed Description of the Embodiments

To better clarify the objectives, technical solutions and advantages of the embodiments of the present invention, the technical solutions according to the embodiments of the present invention are clearly and completely described below with reference to the accompanying drawings in the embodiments of the present invention. Apparently, the embodiments as described below are merely partial, rather than entire, embodiments of the present invention. On the basis of the embodiments of the present invention, all other embodiments obtainable by persons ordinarily skilled in the art without creative effort shall fall within the protection scope of the present invention.

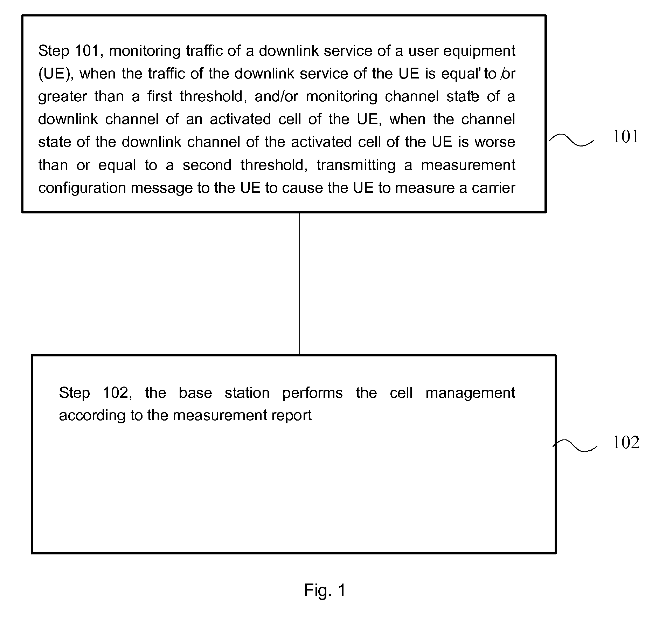

A measuring method for cell management provided by the embodiments of the present invention is described in greater detail below with reference to Fig. 1. Fig. 1 is a flowchart illustrating a measuring method for cell management provided by the embodiments of the present invention. As shown in Fig. 1, the method includes the following steps:
Step 101 - monitoring traffic of a downlink service of a user equipment (UE), when the traffic of the downlink service of the UE is equal to or greater than a first threshold, and/or monitoring a channel state of a downlink channel of an activated cell of the UE, when the channel state of the downlink channel of the activated cell of the UE is worse than or equal to a second threshold, transmitting a measurement configuration message to the UE to cause the UE to measure a carrier frequency point indicated by the measurement configuration message, and to report a measurement report.

The measurement configuration message may contain therein the carrier frequency point required to be measured by the UE, and the cell to which the carrier frequency point corresponds may be either a deactivated cell or a non-configured cell.

Optionally, prior to transmitting a measurement configuration message to the UE, the method may further include:
determining that the UE is located within a service range of at least two cells.

The first threshold described above can be determined according to the experience of communication state of a particular region, or the experience of communication state of a particular location, or the experience of communication state under a particular scenario, and can also be determined according to radio frequency capability of the UE and a packet delay budget of the downlink service of the UE.

Specifically, in one embodiment, the base station transmits the measurement configuration message to the UE to cause the UE to take a period of time to report the measurement report, and this period of time cannot exceed the packet delay budget of the service performed by the UE. At the same time, the radio frequency capability of the UE will affect the measurement time of the UE - for instance, in the case of measurement at the same frequency, the UE can complete the measurement and report the measurement report within 200ms without allocating measurement gap; while in the case of measurement at different frequencies, it is necessary to allocate the measurement gap, and it takes 480ms for the UE to complete the measurement and report the measurement report. Accordingly, it is possible to select several different discrete thresholds according to the radio frequency capability of the UE and the packet delay budget of the downlink service of the UE, to use the different thresholds described above to cause the base station to issue a measurement configuration message to indicate the UE to perform cell measurement, and to report a measurement report, thereby the base station performs cell management according to the measurement report, and a threshold with better technical effects can be used as the first threshold by testing the technical effects in the above procedure, such as the circumstance of power consumption of the UE, the number of signaling interacting between the UE and the network, and whether or not it is possible to perform timely cell management without causing network congestion, etc.

The above is merely one embodiment provided by the embodiments of the present invention without limiting the present invention.

The second threshold described above can be determined according to the radio frequency capability of the UE and the packet delay budget of the downlink service of the UE. The second threshold can be obtained by the same method as the first threshold.

The first threshold and the second threshold can be set on the base station, and it is also possible to set an algorithm for determining thresholds on the base station, and to update the first threshold and the second threshold after a period of time.

The traffic of the downlink service can be represented by parameters such as the transmission rate.

The channel state can be represented by a channel quality indicator (CQI) or a hybrid automatic retransmission request (HARQ), and it is also possible to determine the parameters that represent the channel state using parameters such as the CQI and the HARQ with weighting method.

Step 102 - the base station performs the cell management according to the measurement report.

Cell management includes the management with respect to the cell corresponding to the carrier frequency point supported by the radio frequency capability of the UE performed by the base station, for example, adding a configured cell, deleting a configured cell, reconfiguring a cell, activating and deactivating a configured cell, and changing a primary cell.

Specifically, after receiving the measurement report, the base station can add a configured cell and/or activate a deactivated cell according to the measurement result reported by the UE.

The cell management according to the measurement report includes handling cells of the UE according to the measurement report by using at least one of the following handling manners: adding a configured cell, activating a deactivated cell, and changing a primary cell.

In one embodiment, cell management can also be performed using the aforementioned handling manners in combination with the method of deactivating an activated cell and/or deleting a configured cell. For instance, it is possible to delete a certain configured cell with inferior channel state, and then add a configured cell or activate a deactivated cell; or to deactivate a certain cell with inferior channel state and then add a configured cell or activate a deactivated cell. It should be noted that it is possible for persons skilled in the art to directly and unquestionably derive the aforementioned cell management solution capable of solving the technical problem.

The cell management described above can make transmission of the downlink service meet the requirement for transmission quality by adding available cells or improving the transmission capabilities of activated cells.

With the method of periodically measuring frequency points (i.e., the base station issues a measurement configuration message to the UE to inform the UE of the frequency points to be measured, and the UE periodically measures the configured frequency points), the base station cannot perform cell configuration according to circumstances of increase in traffic and/or deterioration of channel quality, and cannot configure the appropriate measurement period. If the period configured is short, the power-consuming of UE will be extremely high; if the period configured is long, the period cannot be applied to cell management due to inferior temporal effectiveness, and relatively large signaling overhead may arise from the periodical measuring the configured frequency points and reporting by UE. By virtue of the method provided by the embodiments of the present invention, it is possible to perform measurement when needed according to the circumstance of the network, whereby the total time required for measuring is less, the power consumption of the UE is less, and more energy can be saved. Moreover, in comparison with the method of periodical measurement that may require many times for reporting the measurement results, embodiments of the present invention require only one time for reporting the measurement results thereby signaling overhead can be decreased.

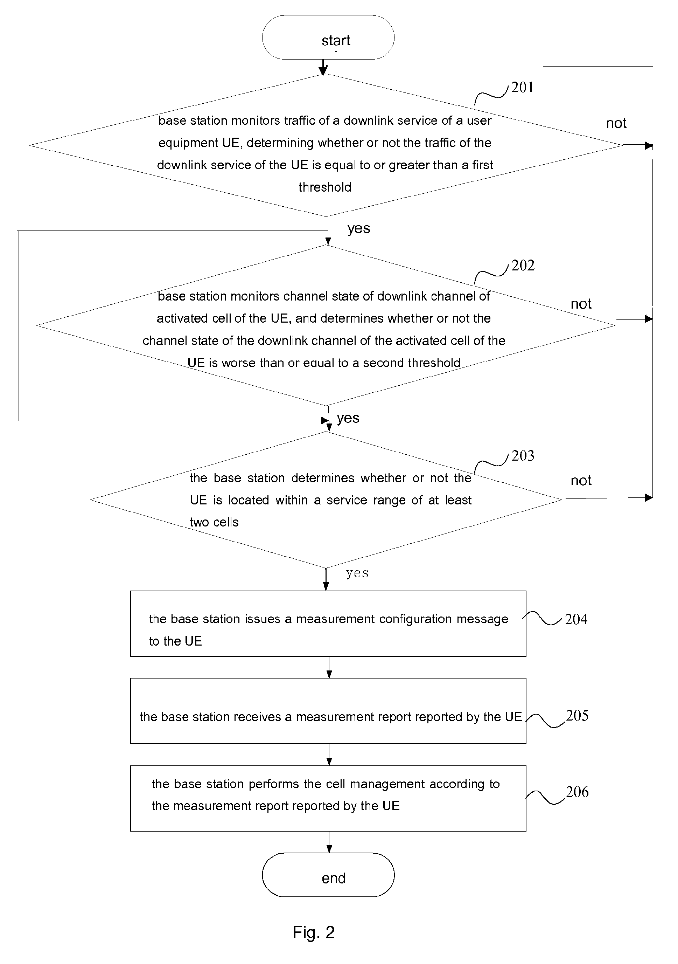

A measuring method for cell management provided by the embodiments of the present invention is described in greater detail below with reference to Fig. 2. Fig. 2 is a flowchart illustrating another measuring method for cell management provided by the embodiments of the present invention. As shown in Fig. 2, the method includes the following steps.

Step 201 - the base station monitors traffic of a downlink service of a user equipment (UE), determining whether or not the traffic of the downlink service of the UE is equal to or greater than a first threshold, performs Step 202 or performs Step 203 when the traffic of the downlink service of the UE is equal to or greater than the first threshold, and performs Step 201 when the traffic of the downlink service of the UE is smaller than the first threshold.

The first threshold can be determined according to the experience of communication state of a particular region, or the experience of communication state of a particular location, or the experience of communication state under a particular scenario, and can also be determined according to radio frequency capability of the UE and a packet delay budget of the downlink service of the UE.

Specifically, in one embodiment, the base station transmits the measurement configuration message to the UE to cause the UE to require a period of time to report the measurement report, and this period of time cannot exceed the packet delay budget of the service performed by the UE. At the same time, the radio frequency capability of the UE will affect the measurement time of the UE - for instance, in the case of measurement at the same frequency, the UE can complete the measurement and report the measurement report within 200ms without allocating measurement gap; while in the case of measurement at different frequencies, it is necessary to allocate the measurement gap, and it takes 480ms for the UE to complete the measurement and report the measurement report. Accordingly, it is possible to select several different discrete thresholds according to the radio frequency capability of the UE and the packet delay budget of the downlink service of the UE, to use the different thresholds described above to cause the base station to issue a measurement configuration message to indicate the UE to perform cell measurement, and to report a measurement report, thereby the base station performs cell management according to the measurement report, and a threshold with better technical effects can be used as the first threshold by testing the technical effects in the above procedure, such as the circumstance of power consumption of the UE, the number of signaling interacting between the UE and the network, and whether or not it is possible to perform timely cell management without causing network congestion, etc.

The traffic of the downlink service can be represented by parameters such as the transmission rate.

Step 202 - the base station monitors a channel state of a downlink channel of an activated cell of the UE, and determines whether or not the channel state of the downlink channel of the activated cell of the UE is worse than or equal to a second threshold, performs Step 203 when he channel state of the downlink channel of the activated cell of the UE is worse than or equal to a second threshold, and performs Step 201 when the channel state of the downlink channel of the activated cell of the UE is better than the second threshold.

In one embodiment, it is possible to directly perform Step 202 without performing Step 201 - that is to say, the base station monitors the channel state of the downlink channel of the activated cell of the UE, performs Step 203 when the channel state of the downlink channel of the activated cell of the UE is worse than or equal to the second threshold, and performs Step 202 when the channel state of the downlink channel of the activated cell of the UE is better than the second threshold.

The second threshold can be determined according to the radio frequency capability of the UE and the packet delay budget of the downlink service of the UE. The second threshold can be obtained by the same method as the first threshold.

The channel state can be represented by a channel quality indicator (CQI) or a hybrid automatic retransmission request (HARQ), and it is also possible to determine the parameters that represent the channel state by using parameters such as the CQI and the HARQ with weighting method.

Step 203 - the base station determines whether or not the UE is located within a service range of at least two cells, performs Step 204 when the UE is located within a service range of at least two cells of the UE, and otherwise performs Step 201.

In one embodiment, Step 202 is directly performed with Step 201 not performed; Step 202 can be performed when the UE is not located within a service range of at least two cells of the UE.

Specifically, the information of the region where the UE is located can be obtained by methods such as reference signal received power (RSRP) measurement and global position system (GPS) positioning.

Step 203 is optional, and when Step 203 is not performed, the following steps are sequentially performed.

Step 204 - the base station issues a measurement configuration message to the UE.

The measurement configuration message may contain therein the frequency point to be measured by the UE, and the cell to which the frequency point corresponds may be either a deactivated cell or a non-configured cell.

Step 205 - the base station receives a measurement report reported by the UE.

Specifically, the UE performs measurement according to the measurement configuration message issued by the base station and reports to the base station the measurement results that satisfy conditions (such as an A3 event).

Step 206 - the base station performs the cell management according to the measurement report reported by the UE.

Specifically, the base station can add a configured cell and/or activate a deactivated cell according to the measurement result reported by the UE.

The cell management according to the measurement report includes handling cells of the UE according to the measurement report by using at least one of the following handling manners: adding a configured cell, activating a deactivated cell, and changing a primary cell.

In one embodiment, cell management can also be performed by using the aforementioned handling manners in combination with the method of deactivating an activated cell and/or deleting a configured cell. For instance, it is possible to delete a certain configured cell with inferior channel state, and then add a configured cell or activate a deactivated cell; or to deactivate a certain cell with inferior channel state and then add a configured cell or activate a deactivated cell. It should be noted that it is possible for persons skilled in the art to directly and unquestionably derive the aforementioned cell management solution capable of solving the technical problem.

The cell management described above can make transmission of the downlink service meet the requirement for transmission quality by adding available cells or improving the transmission capabilities of activated cells.

By virtue of the method provided by the embodiments of the present invention, it is possible to perform measurement when needed according to the circumstance of the network, thereby the total time required for measuring is less, the power consumption of the UE is less, and more energy can be saved. Moreover, in comparison with the method of periodical measurement that may require many times for reporting the measurement results, embodiments of the present invention require only one time for reporting the measurement results, thereby signaling overhead can be decreased.

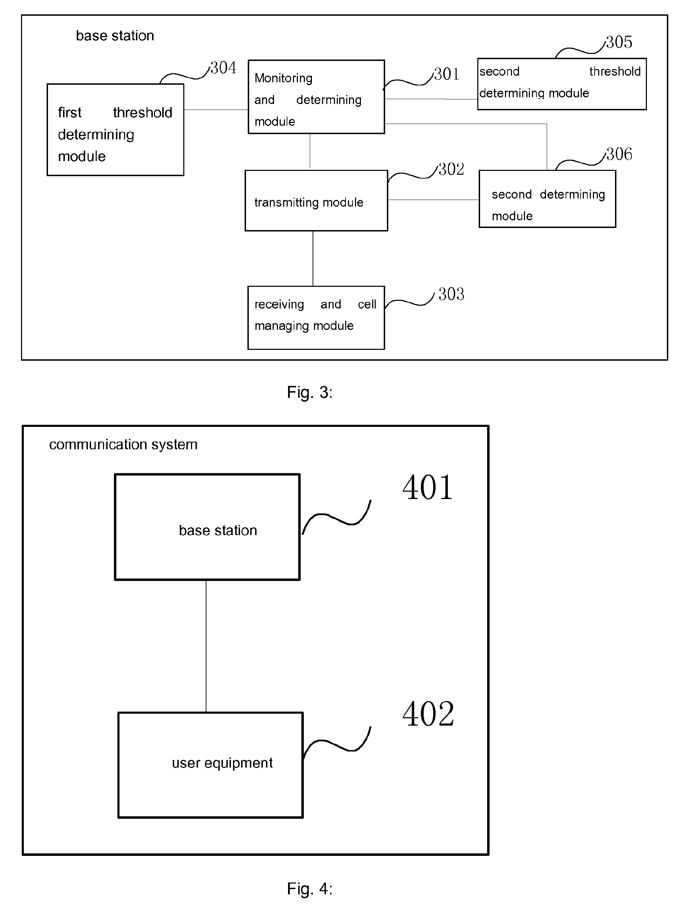

A base station provided by the embodiments of the present invention is described in greater detail below with reference to Fig. 3. Fig. 3 is a schematic diagram exemplarily illustrating the structure of a base station provided by the embodiments of the present invention. As shown in Fig. 3, the base station includes the following modules.

A monitoring and determining module 301 is configured to monitor traffic of a downlink service of a user equipment (UE), and determine that the traffic of the downlink service of the UE is equal to or greater than a first threshold, and/or configured to monitor a channel state of a downlink channel of an activated cell of the UE, and determine that the channel state of the downlink channel of the activated cell of the UE is worse than or equal to a second threshold.

A transmitting module 302 is configured to transmit a measurement configuration message to the UE after the monitoring and determining module determines that the traffic of the downlink service of the UE is equal to or greater than a first threshold and/or that the channel state of the downlink channel of the activated cell of the UE is worse than or equal to a second threshold, to cause the UE to measure a carrier frequency point indicated by the measurement configuration message and to report a measurement report.

The measurement configuration message may contain therein the frequency point to be measured by the UE, and the cell to which the frequency point corresponds may be either a deactivated cell or a non-configured cell.

A receiving and cell managing module 303 is configured to receive the measurement report and to perform the cell management according to the measurement report.

The base station may further include a first threshold determining module 304 that determines the first threshold according to radio frequency capability of the UE and a packet delay budget of the downlink service of the UE, for providing to the monitoring and determining module 301 to determine that the traffic of the downlink service of the UE is equal to or greater than the first threshold.

The first threshold described above can be determined according to the experience of communication state of a particular region, or the experience of communication state of a particular location, or the experience of communication state under a particular scenario.

Specifically, in one embodiment, the base station transmits the measurement configuration message to the UE to cause the UE to take a period of time to report the measurement report, and this period of time cannot exceed the packet delay budget of the service performed by the UE. At the same time, the radio frequency capability of the UE will affect the measurement time of the UE - for instance, in the case of measurement at the same frequency, the UE can complete the measurement and report the measurement report within 200ms without allocating measurement gap; while in the case of measurement at different frequencies, it is necessary to allocate the measurement gap, and it takes 480ms for the UE to complete the measurement and report the measurement report. Accordingly, it is possible to select several different discrete thresholds according to the radio frequency capability of the UE and the packet delay budget of the downlink service of the UE, to use the different thresholds to cause the base station to issue a measurement configuration message to indicate the UE for performing cell measurement, and to report a measurement report, thereby the base station performs cell management according to the measurement report, and a threshold with better technical effects can be used as the first threshold by testing the technical effects in the above procedure, such as the circumstance of power consumption of the UE, the number of signaling interacting between the UE and the network, and whether or not it is possible to perform timely cell management without causing network congestion, etc.

The traffic of the downlink service can be represented by parameters such as the transmission rate.

The channel state can be represented by a channel quality indicator (CQI) or a hybrid automatic retransmission request (HARQ), and it is also possible to determine the parameters that represent the channel state using parameters such as the CQI and the HARQ with weighting method.

The base station may further include a second threshold determining module 305 that determines the second threshold according to radio frequency capability of the UE and a packet delay budget of the downlink service of the UE, for providing to the monitoring and determining module 301 to determine that the channel state of the downlink channel of the activated cell of the UE is worse than or equal to a second threshold.

The second threshold can be obtained by the same method as the first threshold.

The first threshold and the second threshold can be set on the base station, and it is also possible to set an algorithm for determining thresholds on the base station, and to update the first threshold and the second threshold after a period of time.

Preferably, the base station further includes a second determining module 306 that is caused to determine that the UE is located within a service range of at least two cells to cause the transmitting module 302 to transmit the measurement configuration message to the UE, after the monitoring and determining module 301 determines that the traffic of the downlink service of the UE is equal to or greater than the first threshold, and/or determines that the channel state of the downlink channel of the activated cell of the UE is worse than or equal to a second threshold.

The receiving and cell managing module 303 is specifically used to receive the measurement report and handles cells of the UE according to the measurement report by using at least one of the following handling manners: adding a configured cell, activating a deactivated cell, and changing a primary cell.

The cell management according to the measurement report includes handling cells of the UE according to the measurement report by using at least one of the following handling manners: adding a configured cell, activating a deactivated cell, and changing a primary cell.

In one embodiment, cell management can also be performed by using the aforementioned handling manners in combination with the method of deactivating an activated cell and/or deleting a configured cell. For instance, it is possible to delete a certain configured cell with inferior channel state, and then add a configured cell or activate a deactivated cell; or to deactivate a certain cell with inferior channel state and then add a configured cell or activate a deactivated cell. It should be noted that it is possible for persons skilled in the art to directly and unquestionably derive the aforementioned cell management solution capable of solving the technical problem.

The cell management described above can make transmission of the downlink service meet the requirement for transmission quality by adding available cells or improving the transmission capabilities of activated cells.

With the method of periodically measuring frequency points (i.e., the base station issues a measurement configuration message to the UE to inform the UE of the frequency points to be measured, and the UE periodically measures the configured frequency points), the base station cannot perform cell configuration according to circumstances of increase in traffic and/or deterioration of channel quality, and cannot configure the appropriate measurement period. If the period configured is short, the power-consuming of UE will be extremely high; if the period configured is long, the period cannot be applied to cell management due to inferior temporal effectiveness, and relatively large signaling overhead may arise from the periodical measuring the configured frequency points and reporting by UE. By virtue of the method provided by the embodiments of the present invention, it is possible to perform measurement when needed according to the circumstance of the network, thereby the total time required for measuring is less, the power consumption of the UE is less, and more energy can be saved. Moreover, in comparison with the method of periodical measurement that may require many times for reporting the measurement results, embodiments of the present invention require only one time for reporting the measurement results, thereby signaling overhead can be decreased.

Other structures and functions of the base station may refer to the foregoing method embodiments, which would not be described below any more.

A communication system provided by the embodiments of the present invention is described in greater detail below with reference to Fig. 4. Fig. 4 is a schematic diagram exemplarily illustrating the structure of a communication system provided by the embodiments of the present invention. As shown in Fig. 4, the system includes a base station 401 communicably connected to a user equipment 402.

The base station 401 monitors downlink traffic of a downlink service of the user equipment 402, when the traffic of the downlink service of the user equipment 402 is equal to or greater than a first threshold, and/or monitors a channel state of a downlink channel of an activated cell of the user equipment, when the downlink channel state of the activated cell of the user equipment is worse than or equal to a second threshold,

transmits a measurement configuration message to the UE to cause the user equipment 402 to measure a carrier frequency point indicated by the measurement configuration message, and to report a measurement report;
and performs cell management according to the measurement report.

The measurement configuration message may contain therein the frequency point to be measured by the user equipment 402, and the cell to which the frequency point corresponds may be either a deactivated cell or a non-configured cell.

The first threshold can be determined according to the experience of communication state of a particular region, or the experience of communication state of a particular location, or the experience of communication state under a particular scenario.

The traffic of the downlink service can be represented by parameters such as the transmission rate.

The channel state can be represented by a channel quality indicator (CQI) or a hybrid automatic retransmission request (HARQ), and it is also possible to determine the parameters that represent the channel state by using parameters such as the CQI and the HARQ with weighting method.

The second threshold can be obtained by the same method as the first threshold.

The first threshold and the second threshold can be set on the base station 401, and it is also possible to set an algorithm for determining thresholds on the base station 401, and to update the first threshold and the second threshold after a period of time.

The base station 401 is further used to determine that the user equipment 402 is located within a service range of at least two cells before transmitting the measurement configuration message to the user equipment 402.

The cell management performed by the base station 401 according to the measurement report specifically includes that the base station 401 receives the measurement report and handles cells of the user equipment 402 according to the measurement report by using at least one of the following handling manners: adding a configured cell, activating a deactivated cell, and changing a primary cell.

In one embodiment, cell management can also be performed by using the aforementioned handling manners in combination with the method of deactivating an activated cell and/or deleting a configured cell. For instance, it is possible to delete a certain configured cell with inferior channel state, and then add a configured cell or activate a deactivated cell; or to deactivate a certain cell with inferior channel state and then add a configured cell or activate a deactivated cell. It should be noted that it is possible for persons skilled in the art to directly and unquestionably derive the aforementioned cell management solution capable of solving the technical problem.

The cell management described above can make transmission of the downlink service meet the requirement for transmission quality by adding available cells or improving the transmission capabilities of activated cells.

Other structures and functions of the base station may refer to the foregoing method embodiments, which would not be described below any more.

With the method of periodically measuring frequency points (i.e., the base station 401 issues a measurement configuration message to the user equipment 402 to inform the user equipment 402 of the frequency points to be measured, and the user equipment 402 periodically measures the configured frequency points), the base station 401 cannot perform cell configuration according to circumstances of increase in traffic and/or deterioration of channel quality, and cannot configure the appropriate measurement period. If the period configured is short, the power-consuming of user equipment 402 will be extremely high; if the period configured is long, the period cannot be applied to cell management due to inferior temporal effectiveness, and relatively large signaling overhead may arise from the periodical measuring the configured frequency points and reporting by user equipment 402. By virtue of the method provided by the embodiments of the present invention, it is possible to perform measurement when needed according to the circumstance of the network, whereby the total time required for measurement is less, the power consumption of the user equipment 402 is less, and more energy can be saved. Moreover, in comparison with the method of periodical measurement that may require many times for reporting the measurement results, embodiments of the present invention require only one time for reporting the measurement results, thereby signaling overhead can be decreased.

One skilled in the art can understand that, all or part of the steps achieving the aforementioned method embodiments can be implemented by related hardware instructed by program, and the program can be stored in a computer-readable storage medium and execute the steps including the aforementioned method embodiments when performed. The storage medium described above includes various media capable of storing program codes such as an ROM, an RAM, a magnetic disc, or an optical disc.

As should be finally explained, the aforementioned embodiments are provided merely to explain, rather than to restrict, the technical solutions of the present invention. Although the present invention is described in detail with reference to the aforementioned embodiments, persons ordinarily skilled in the art should understand that it is still possible to modify the technical solutions recorded in the various embodiments or to equivalently replace partial technical features therein, and that such modification or replacement would not essentially depart the corresponding technical solutions from the spirits and scopes of the technical solutions of the various embodiments of the present invention.

## Claims

1. A measuring method for cell management, comprising:
monitoring traffic of a downlink service of a user equipment (UE), when the traffic of the downlink service of the UE is equal to or greater than a first threshold, and/or monitoring a channel state of a downlink channel of an activated cell of the UE, when the channel state of the downlink channel of the activated cell of the UE is worse than or equal to a second threshold,
transmitting a measurement configuration message to the UE to cause the UE to measure a carrier frequency point indicated by the measurement configuration message and to report a measurement report; and
performing the cell management according to the measurement report.

2. The method according to claim 1, wherein:
the first threshold is determined according to radio frequency capability of the UE and a packet delay budget of the downlink service of the UE; and/or
the second threshold is determined according to radio frequency capability of the UE and a packet delay budget of the downlink service of the UE.

3. The method according to claim 1, wherein before the transmitting a measurement configuration message to the UE, the method further comprises,:
determining that the UE is located within a serving range where at least two cells are able to serve.

4. The method according to claim 1, wherein the performing the cell management according to the measurement report comprises:
receiving the measurement report, and performing an operation on a cell of the UE according to the measurement report by using at least one of the following operations: adding a configured cell, activating a deactivated cell, and changing a primary cell.

5. A base station, comprising:
a monitoring and determining module, configured to monitor traffic of a downlink service of a user equipment (UE) and determine that the traffic of the downlink service of the UE is equal to or greater than a first threshold, and/or configured to monitor a channel state of a downlink channel of an activated cell of the UE and determine that the channel state of the downlink channel of the activated cell of the UE is worse than or equal to a second threshold;
a transmitting module, configured to transmit a measurement configuration message to the UE after the monitoring and determining module determines that the traffic of the downlink service of the UE is equal to or greater than a first threshold and/or that the channel state of the downlink channel of the activated cell of the UE is worse than or equal to a second threshold, to cause the UE to measure a carrier frequency point indicated by the measurement configuration message and to report a measurement report ; and
a receiving and cell managing module, configured to receive the measurement report and to perform the cell management according to the measurement report.

6. The base station according to claim 5, further comprising a first threshold determining module and/or a second threshold determining module, wherein
the first threshold determining module is configured to determine the first threshold according to radio frequency capability of the UE and a packet delay budget of the downlink service of the UE, wherein the first threshold is provided to the monitoring and determining module to determine that the traffic of the downlink service of the UE is equal to or greater than the first threshold; and/or
the second threshold determining module is configured to determine the second threshold according to radio frequency capability of the UE and a packet delay budget of the downlink service of the UE, wherein the second threshold is provided to the monitoring and determining module to determine that the channel state of the downlink channel of the activated cell of the UE is worse than or equal to a second threshold.

7. The base station according to claim 5, further comprising a second determining module, wherein
The second determining module is configured to be triggered by the monitoring and determining module to determine that the UE is located within a serving range where at least two cells are able to serve, after the monitoring and determining module monitors the traffic of the downlink service of the UE and determines that the traffic of the downlink service of the UE is equal to or greater than the first threshold, and/or monitors the channel state of the downlink channel of the activated cell of the UE and determines that the channel state of the downlink channel of the activated cell of the UE is worse than or equal to the second threshold, in order to trigger the transmitting module to transmit the measurement configuration message to the UE.

8. The base station according to claim 5, wherein:
the receiving and cell managing module is specifically configured to receive the measurement report and to performing an operation on a cell of the UE according to the measurement report by using at least one of the following operations: adding a configured cell, activating a deactivated cell, and changing a primary cell.

9. A communication system, comprising a base station communicably connected to a user equipment (UE), wherein:
the base station monitors downlink traffic of a downlink service of the UE, when the traffic of the downlink service of the UE is equal to or greater than a first threshold, and/or monitors a channel state of a downlink channel of an activated cell of the UE, when the downlink channel state of the activated cell of the UE is worse than or equal to a second threshold,
transmits a measurement configuration message to the UE to cause the UE to measure a carrier frequency point indicated by the measurement configuration message and to report a measurement report ; and
performs cell management according to the measurement report.

10. The communication system according to claim 9, wherein the base station performs cell management according to the measurement report, specifically comprises:
the base station receives the measurement report, and performs an operation on a cell of the UE according to the measurement report by using at least one of the following operations: adding a configured cell, activating a deactivated cell, and changing a primary cell.
